Europäisches Patentamt

European Patent Office

Office européen des brevets

(11) Publication number: **0 141 793**
A1

# (12) EUROPEAN PATENT APPLICATION

(21) Application number: 84870085.2

(22) Date of filing: 28.06.84

(51) Int. Cl.⁴: **B 01 D 53/22**

---

(30) Priority: 30.06.83 US 509694

(43) Date of publication of application: 15.05.85
Bulletin 85/20

(84) Designated Contracting States: **AT BE CH DE FR GB IT LI LU NL SE**

(71) Applicant: **Monsanto Company, Patent Department 800 North Lindbergh Boulevard, St. Louis Missouri 63167 (US)**

(72) Inventor: **Holladay, Harry Philip, 5009 Oak Park Road, Raleigh North Carolina 27609 (US)**
Inventor: **Woodcock, Maurice Lucien, Parkside Drive Route 8, P.O. Box 183-F, Raleigh North Carolina 27612 (US)**
Inventor: **Ward, Robert Roch, 24 Kenwick Road, Hockessin Delaware, 19707 (US)**

(74) Representative: **McLean, Peter et al, Monsanto Europe S.A. Patent Department Avenue de Tervuren 270-272 Letter Box No 1, B-1150 Brussels (BE)**

---

(54) Asymmetric gas separation membranes having increased selectivy, and process for their production.

(57) Asymmetric gas separation membranes of polymeric materials having selective permeation of at least one gas of a gaseous mixture over that of one or more remaining gases of the gaseous mixture, exhibit improved permeation selectivities for the at least one gas when the symmetric membranes are contacted on one or both surfaces with an effective amount of a solvent, the solvent having a solubility parameter similar to the solubility parameter of the polymeric materials comprising the membranes. The improved asymmetric gas separation membranes, process for producing the improved membranes, and processes for utilizing such membranes for selectively separating at least one gas from a gaseous mixture by permeation are disclosed.

0141793

ASYMMETRIC GAS SEPARATION MEMBRANES HAVING
IMPROVED SELECTIVITY

BACKGROUND OF THE INVENTION

This invention relates to an asymmetric gas separation membrane which exhibits improved gas separation selectivity and the process to produce such an improved asymmetric gas separation membrane. In another aspect, the invention relates to processes utilizing such membranes for improved selectivity in the separation of at least one gas from a gaseous mixture by permeation.

The separating, including upgrading of the concentration of at least one selective gas from a gaseous mixture, is an especially important procedure in view of the demands and the supplies of chemical feedstocks. Frequently these demands are met by separating one or more desired gases from gaseous mixtures and utilizing the gaseous products for processing. Applications have been made employing separation membranes for selectively separating one or more gases from gaseous mixtures. To achieve selective separation, the membrane exhibits less resistance to transport of one or more gases than of at least one other gas of the mixture. Thus, selective separation can provide preferential depletion or concentration of one or more desired gases in the mixture with respect to at least one other gas and therefore provide a product having a different proportion of the one or more desired gases to the at least one other gas than the proportion in the mixture. However, in order for selective separation of the one or more desired gases by the use of separation membranes to be technically feasible the membranes must satisfy several criteria so that the use of the separation procedure has utility. For instance, the membranes must be capable of withstanding the conditions to which they may be subjected during the separation operation. The membranes must also provide an adequately selective separation of one or more desired gases at a sufficiently high flux, that is, permeation rate of the permeate gas per unit surface area. Thus, separation membranes which exhibit a high flux but low selectivity separation are unattractive as they require large separating membrane surface area. Similarly, separation membranes which exhibit adequately high selective separation but undesirably low fluxes are also lacking in practical use feasibility. Furthermore, membranes which are not capable of maintaining the desired performance of flux and selectivity over an extended period of time in adverse operating environments are likewise undesirable. Adverse environmental conditions include extremes of temperature, pressure and concentration of chemical contaminants. Accordingly, research has continued to develop gas separation membranes which provide improved performance regarding the separation of one or more desired gases for an extended period of time under adverse environmental conditions.

The passage of gas through a membrane can proceed through pores, i.e. continuous channels for fluid flow and communication with both feed and exit surfaces of the membrane (which pores may or may not be suitable for separation by Knudsen flow or diffusion); in another mechanism, in accordance with current views of gas separation membrane theory the passage of a gas through the membrane may be by interaction of a gas with a material of the membrane. In this latter postulated mechanism, the permeability of a gas through a membrane is believed to involve the solubility of the gas in the membrane material and the permeability constant for single gas is presently viewed as being the product of the solubility and diffusiveness of the gas in the membrane. A given membrane material has a particular permeability constant for passage of the given gas by the interaction of the gas with the material of the membrane. The rate of permeation of the gas, i.e. flux through the membrane is related to the permeability constant, but is also influenced by variables such as the membrane thickness, the physical nature of the membrane, the partial pressure differential of the permeate gas across the membrane, the temperature and the like.

In general, efforts have been directed at providing material of a gas separation membrane in as thin a form as possible in view of the low permeabilities of most membrane materials in order to provide adequate flux while providing a membrane as pore-free as possible such that gases are passed through the membrane by interaction with the material of the membrane. One approach for developing separation membranes suitable for gaseous systems has been to provide composite membranes having the thinnest possible superimposed membranes supported on an anisotropic porous support where the superimposed ultrathin membrane provides the desired separation. The superimposed membranes are advantageously sufficiently thin, i.e. ultrathin, to provide reasonable fluxes. The essential function of a porous support is to support the superimposed membrane. Suitable supports are desirably porous to provide low resistance to permeate passage after the superimposed membrane has performed its function of selectivity separating the permeate from the feed mixture. Klass et al, U.S. Patent number 3,616,607; Stancell et al, U.S. Patent number 3,657,113; Wasuda, U.S. Patent number 3,775,303; and Browall, U.S. Patent number 3,980,456 exemplify gas separation membranes having superimposed thin membranes on a porous support.

Such composite membranes for gas separations have not been without problems. For instance, Browall discloses that in the fabrication of composite membranes of ultrathin films, fine particles, particles below about 3,000 angstroms in size, may be deposited under or between preformed ultrathin membrane layers and because of their large size in comparison to the ultrathin membranes, puncture the ultrathin membranes. Such breaches reduce the selectivity and thus the effectiveness of the membrane. The Browall patent discloses applying a preformed organopolysiloxane-polycarbonate copolymer sealing material over the ultrathin membrane to cover the breaches caused by the fine particles. Browall also discloses employing a preformed layer of the organopolysiloxane-polycarbonate copolymer between the ultrathin membranes and the porous polycarbonate support as an adhesive. Thus, the composite membranes of Browall are complex in materials and techniques of construction.

A major improvement in gas separation membranes is disclosed by Henis et al in U.S Patent number 4,230,463 which pertains to particular multicomponent membranes for gas separations comprising a coating in contact with the porous separation membrane wherein the separation properties of the multicomponent membranes are principally determined by the porous separation membrane as opposed to the material of the coating. Such multicomponent membranes for the separation of at least one gas from a gaseous mixture can exhibit a desirable selectivity and still exhibit a useful flux. Moreover, such multicomponent membranes for gas separation can be fabricated from a wide variety of gas separation membrane materials which are advantageous for a given gas separation. The desired combination of flux and selectivity of separation can be provided by the configuration and methods of preparation and combinations of the components. For instance, material having high selectivity of separation but a relatively low permeability constant can be utilized to provide multicomponent membranes having desired permeation rates and desired selectivity of separation through utilization of a porous substrate which contributes to the overall separation efficiency of the multicomponent membrane.

Despite such advances in gas membrane separations, it would be advantageous to construct any membrane, including such multicomponent membranes, from materials that have reasonably good flux and substantially improved selectivity of separation while still remaining stable in use. That is, the membrane should have high structural strength, toughness, abrasion and chemical resistance to remain functional under extremes of temperature and differential pressure. In this regard such membranes are often required to operate in pressure differentials across the membrane of at least 300 or 500 psia or higher, for instance up to 2000 psia or even higher. In general, operation environments require membrane material which is resistant to hydrocarbons, ammmonia, water, and acid gases such as carbon dioxide and hydrogen sulfide and the like. Such chemicals may have a tendency to dissolve or plasticize the material forming gas separation membranes resulting in deterioration of the membrane or densification of an otherwise asymmetric structure.

Research efforts continue in the field of gas separation membrane technology to reach economic gas separation performance utilizing asymmetric membranes of materials which have intrinsically high separation selectivity for gases such as hydrogen, carbon dioxide and the like. Attempts to eliminate surface porosity of these membrane materials in an asymmetric state by using either spinning or post treatment techniques have generally resulted in membranes, particularly hollow fiber membranes, that have poor performance gas separations either in low flux or low selectivities or both. With hollow fiber gas separation membranes spun from polymeric materials having high intrinsic selectivities for gas separations such as polyphenylene oxides, substituted polyphenylene oxides, polyimides, polyamides, polysulfones, polyethersulfones, cellulose esters, and the like, these treatments have produced modified fibers with uncoated separation properties of interest compared to those of multicomponent coated polysulfone fibers. We have found that surface treatment of flat or porous hollow fiber asymmetric gas separation membranes with solvents having a solubility parameter similar to the solubility parameter of the polymeric material comprising the membranes offers a productive and simple route to uncoated gas separation membranes having desirable separation properties.

SUMMARY OF THE INVENTION

The invention provides gas separation membranes comprised of asymmetric membranes exhibiting improved gas separation selectivity. A preformed asymmetric gas separation membrane of polymeric material having selective permeation of at least one gas of a gaseous mixture over that of one or more remaining gases of the gaseous mixture has been found to exhibit improved separation factors for the permeating gases often being contacted on one or both surfaces with a solvent having a solubility parameter within about plus or minus 2 of the polymeric material solubility parameter which comprises the asymmetric gas separation membrane. The invention also provides for a process to produce the improved flat, tubular, or hollow fiber asymmetric membranes having enhanced gas separation properties, for example, comparable to the gas separation performances of coated or multicomponent gas separation membranes. It has been discovered that by treating asymmetric membranes with solvent having specific solubility parameters results in a modified asymmetric membrane having uncoated separation properties significantly greater than the separation factor exhibited by the asymmetric membranes before solvent treatment.

### DEFINITION OF TERMS

Separation factor ($\alpha a/b$) for a membrane for a given pair of gases a and b is defined as the ratio of the permeability constant ($P_a$) of the membrane for gas a to the permeability constant ($P_b$) of the membrane for gas b. Separation factor is also equal to the ratio of the permeability ($P_a/\ell$) of a membrane of thickness $\ell$ for gas a of a gas mixture to the permeability of the same membrane to gas b, ($P_b/\ell$) wherein the permeability for a given gas is the volume of gas, standard temperature and pressure (STP), which passes through a membrane per square centimeter of surface area, per second, for a partial pressure drop of one centimeter of mercury across the membrane per unit of thickness, and is expressed as

$$P/\ell = cm^3/cm^2\text{-sec-cmHg}.$$

In practice, the separation factor with respect to a given pair of gases for a given membrane can be determined employing numerous techniques which provide sufficient information for calculation of permeability constants or permeabilities for each of the pair of gases. Several of the many techniques available for determining permeability constants, permeabilities, and separation factors are disclosed by Hwang et al, Techniques of Chemistry, Volume VII, "Membranes in Separations", John Wiley & Sons, (1975) (herein incorporated by reference) at Chapter 12, pages 296 to 322.

Dense or compact membranes are membranes which are essentially free of pores, i.e. fluid flow channels communicating between the surfaces of the membrane and are essentially free of voids, i.e. regions within the thickness of the membrane which do not contain the material of the membrane. The dense membrane is essentially the same throughout the structure, therefore it falls within the definition of isotropic membrane. On the other hand, porous separation membranes relate to membranes having continuous channels for fluid flow which communicate between the feed surface and the exit surface. Porous regions of such membranes can also extend from the surface skin or compact surface through approximately 90 to 99% of the total membrane thickness. The remaining dense region extends to the opposite surface. Asymmetric membranes have considerable internal void volume; however, this volume is not related to continuous porosity from one side of the membrane to the other. Asymmetric membranes have at least one skinned surface, i.e. a compact layer that is at an internal or external surface which is generally on one or both faces of the membrane.

For many purposes it is sufficient to say that a solvent is the component, usually liquid, that is present in excess in a solution. The term may be also applied to a substance frequently used as a solvent, such as water or alcohol, even though the proportion is less than excess. Solvents comprised of small molecules behave in a different manner wherein the solution involves a high polymer component vs. a solution of low molecular weight components. One quantity which has been used to predict polymer solubility is the solubility parameter $\delta$. This parameter is defined as the square root of the cohesive energy density [molar energy of vaporization (molar volume)]. The solubility parameter of solvents is easily calculated; but for polymers it must be obtained by experiment, for example, cross-linked or substituted polymers. For the purposes of this invention, solvents are defined as those components which have a solubility parameter within plus or minus 2 of the solubility parameters of the polymeric material comprising the asymmetric gas separation membrane. Multicomponent solvent blends can be effectively utilized within this solubility parameter relationship and in accordance with the invention even though individual component solvent solubility parameters are outside the plus or minus range 2 if the solvent blend solubility parameter average is within the desired relationship.

An "effective amount" of solvent as referred to herein is used in relation to the amount of solvent contacted with the asymmetric gas separation membrane. This effective amount can be varied by factors such as solvent concentrations, time of exposure, temperature and the like. An effective amount is herein defined as that solvent contact amount sufficient to improve the asymmetric gas separation membrane selectivity but insufficient to impair the mechanical integrity, strength, or other physical properties of the polymer which are detrimental to the function of the polymeric membrane as a gas separator.

## DESCRIPTION OF THE PREFERRED EMBODIMENTS

Attempts to eliminate surface porosity of asymmetric gas separation membranes or even composite or multicomponent membranes have utilized spinning techniques relative to hollow fiber membranes and/or post treatment techniques in order to improve asymmetric membrane performance. Generally, these treatment techniques have resulted in fibers that have economically poor gas fluxes or selectivities when, in fact, an improvement in both or at least a substantial improvement in one without seriously deterring the other is desired. Hollow fibers spun from relatively good permeation polymers have been modified in various ways but without achieving significant improvement in the fluxes or selectivites for gas separations. We have found that the treatment of asymmetric membranes either flat or hollow fiber in form with preferably a volatile solvent offers significant improvement in the asymmetric membrane gas selectivity. The solvent treatment provides a simple route to improving asymmetric gas separation membrane performance to such a level that uncoated hollow fibers perform at separation levels up to and greater than the intrinsic selectivity of the polymer from which the fiber is spun.

The material used for the asymmetric separation membrane may be a natural or synthetic substance having useful gas separation properties. In the case of polymers, both addition and condensation polymers which can be cast, extruded or otherwise fabricated to provide asymmetric separation membranes are included. The asymmetric separation membranes can be prepared, for example, by casting from a solution comprised of a good solvent for the polymeric material into a poor or nonsolvent for the material. The spinning and/or casting conditions and/or treatments subsequent to the initial formation and the like can influence the porosity, i.e. the asymmetry and resistance to gas or fluid flow of the porous separation membranes.

Generally organic polymers, mixtures of organic polymers, or organic polymers mixed with inorganics are used to prepare the asymmetric separation membrane. Typical polymers suitable for the asymmetric separation membrane according to the invention can be substituted or unsubstituted polymers and may be selected from polysulfones; poly(styrenes), including styrene-containing copolymers such as acrylonitrile-styrene copolymers, styrene-butadiene copolymers and styrene-vinylbenzylhalide copolymers; polycarbonates; cellulosic polymers, such as cellulose acetate-butyrate, cellulose propionate, ethyl cellulose, methyl cellulose, nitrocellulose, etc.; polyamides and polyimides, including aryl polyamides and aryl polyimides; polyethers; poly(arylene oxides) such as poly(phenylene oxide) and poly(xylene oxide); poly(esteramide-diisocyanate); polyurethanes; polyesters (including polyarylates), such as poly(ethylene terephthalate), poly(alkyl methacrylates), poly(alkyl acrylates), poly(phenylene terephthalate), etc; polysulfides; polymers from monomers having alpha-olefinic unsaturation other than mentioned above such as poly(ethylene), poly(propylene), poly(butene-1), poly(4-methyl pentene-1), polyvinyls, e.g. poly(vinyl chloride), poly(vinyl fluoride), poly(vinylidene chloride), poly(vinylidene fluoride), poly(vinyl alcohol), poly(vinyl esters) such as poly(vinyl acetate) and poly(vinyl propionate), poly(vinyl pyridines), poly(vinyl pyrrolidones), poly(vinyl ethers), poly(vinyl ketones), poly(vinyl aldehydes) such as poly(vinyl formal) and poly(vinyl butyral), poly(vinyl amides), poly(vinyl amines), poly(vinyl urethanes), poly(vinyl ureas), poly(vinyl phosphates), and poly(vinyl sulfates); polyallyls; poly(benzobenzimidazole); polyhydrazides; polyoxadiazoles; polytriazoles; poly(benzimidazole); polycarbodiimides; polyphosphazines; etc., and interpolymers, including block interpolymers containing repeating units from the above such as terpolymers of acrylonitrile-vinyl bromide-sodium salt of para-sulfophenylmethallyl ethers; and grafts and blends containing any of the foregoing. Typical substituents providing substituted polymers include halogens such as fluorine, chlorine and bromine; hydroxyl groups; lower alkyl groups; lower alkoxy groups; monocyclic aryl; lower acyl groups and the like.

Selection of the asymmetric separation membrane for improved gas separations may be made on the basis of heat resistance, solvent resistance, mechanical strength of the asymmetric separation membrane, as well as other factors indicated by the operating conditions for selective permeation, as long as the asymmetric separation membrane has the prerequisite relative separation factors in accordance with the invention for at least one pair of gases.

In making asymmetric hollow filament separation membranes, a wide variety of spinning conditions may be employed. These methods are disclosed, for example, in the preparation of polysulfone hollow filaments by Cabasso et al in Research and Development of NS-1 and Related Polysulfone Hollow Fibers for Reverse Osmosis Desalination of Seawater, supra. In addition, methods taught for preparing the porous separation membrane as disclosed in U.S. Patent 4,230,463 are appropriate for preparing the preformed asymmetric separation membranes which when contacted with effective amounts of a volatile solvent result in improved asymmetric gas separation membranes.

One simple method for contacting and modifying the asymmetric membranes with a solvent is to dip coat, for example the asymmetric hollow fiber membranes, with various solvents at varying concentrations and temperatures. In order to achieve an effective amount of the solvent contact with the asymmetric membranes, these contacts must be considered independently depending on the solvents being used, whether in concentrate liquid or vapor phase and the polymeric materials comprising the asymmetric membrane. In the case of vaporized solvent modification of the asymmetric membranes, the solvent vapors can be sprayed directly on to the membranes or the membranes may be treated in a vapor atmosphere of the solvent. The solvents according to the invention should be contacted with the membranes in effective amounts wherein the solvent has a solubility parameter within about plus or minus 2 of the solubility parameter of the polymeric material comprising the membrane. Solvents having solubility parameters outside the plus or minus 2 relationship can be blended with other solvents in order to achieve the solubility parameter requirement and fall within the requirements of the invention. In general, many individual solvents and combinations of solvents can be utilized according to the invention in order to achieve the permeation modified asymmetric gas separation membrane. Organic solvents, for example used for modifying the asymmetric gas separation membranes formed from polymeric materials having gas separation capabilities, are desirably low boiling solvents such as, for example, lower alcohols of about 6 carbons or less which are generally liquid at ambient conditions. These lower boiling solvents are preferred and permit separation removal of any residual solvent material from the permeation modified asymmetric gas separation membrane. The solvent treatment and resulting permeation modified membranes are not in the nature of a permanent coated membrane. Solvents according to the invention are characterized as being those having individually or blend solubility parameters within about plus or minus 2 of the solubility parameter of the polymer comprising the membrane. For example, polysulfone polymeric materials have solubility parameters of from about 10.5 to 11.0; thus, many hydrocarbon compounds are suitable such as: alcohols having solubility parameters in general from 10.6 to about 14.5; aromatics having solubility parameters of from about 8.5 to about 9.5; chlorinated hydrocarbons having solubility parameters of from about 8.6 to about 10.8; selected ethers, esters, ketones, and even plasticizers. In the case of ketones, many of the ketones are suitable if sufficiently diluted with, for example, water.

As far as the methodology of the present invention is concerned, an asymmetric gas separation membrane onto which modifying solvents have been contacted is dried and/or heated, and after the modifying solvents have been removed, the permeation modified asymmetric membranes are in a prepared and modified condition for use.

Solvent treatments of asymmetric gas separation membranes develop higher separation factors for the gases being separated with acceptable gas permeabilities without further coating or treatment. These membranes, for example, polyethersulfone and polysulfone, also appear to have higher resistance to hydrocarbon streams with regard to stability than untreated fibers. These treated asymmetric membranes of polysulfone and polyethersulfone have the chemical resistance of the base polymer, i.e. polysulfone and polyethersulfone, without the accompanying problems experienced with coating materials. Coated membranes present two resistant models to hydrocarbon interference, for example, the resistance of the base polymer as well as the polymer of the coating material.

Asymmetric gas separation membranes have been found to be amenable to membrane pore closure on the surface areas through the use of solvents according to the invention. In Table 1 following, the asymmetric polysulfone hollow fiber membrane performance as illustrated in Example 1 was relative to pure gas test at 70°C. In Example 2 the same membrane was treated with propanol/water 30% by weight n-propanol and 70% by weight water for 5 minutes under ambient conditions in a dip fashion raising the separation factor to 35 from the untreated value of 18. Example 3 illustrates the impact of an additional dip in 90 to 10 by weight percent hexanol to toluene which further increases the separation factor of the same asymmetric hollow fiber as compared to Examples 1 and 2 but with a decrease in helium permeability. The 90 to 10 hexanol to toluene dip represents a solvent blend having a blend solubility parameter within the scope of the invention. The presence of water in the propanol dip decreased the helium permeability drop as seen in the t-butanol example 4. The pure t-butanol asymmetric fiber dip presented the best combination of results with the polysulfone asymmetric fibers.

TABLE 1

| Example | Treatment | PURE GAS TEST AT 70°C. | |
| --- | --- | --- | --- |
| | | $10^6$ He | He/N$_2$ SF |
| 1 | None-as received | 255 | 18 |
| 2 | 30/70 n-propanol/H$_2$O | 145 | 35 |
| 3 | 30/70 n-propanol/H$_2$O + H/T 90/10 | 121 | 40 |
| 4 | t-butanol | 158 | 44 |
| 5 | 30/70 t-butanol/H$_2$O | 174 | 36 |

36-21(6265)A

0141793

Asymmetric hollow fiber membranes of polysulfone were also dip treated with t-butanol containing small percents by weight of siloxanediols with the results reported in Table 2. In Table 2 a control as shown in Example 6 of straight t-butanol treatment can be compared with Examples 7 and 8 wherein the t-butanol treatment contains 0.5 percent by weight of two different molecular weight siloxanediols. Results of Examples 6, 7, and 8 of Table 2 indicate that possibly the diol controls densification activities of the t-butanol solvent, thus providing superior separation factors with small reductions in permeability relative to Example 1 of Table 1 wherein the untreated asymmetric hollow fiber of polysulfone performance data is indicated.

The results of Table 2 clearly illustrate that the solvent treatment according to the invention can be combined with other additives which further enhance the performance of asymmetric gas separation membranes.

TABLE 2

PURE GAS TEST AT 70°C.

| EXAMPLE | TREATMENT | $10^6$ He P/$\ell$ | He/N$_2$ SF |
|---|---|---|---|
| 6 | t-butanol | 158 | 44 |
| 7 | 0.5% 102K Mw Diol | 207 | 57 |
| 8 | 0.5% 28K Mw Diol | 213 | 56 |

According to the invention, the alcohol treatments appear to be one of the more preferred treatments; however, many compounds having OH groups in common may be suitable as permeation modifiers according to the invention. Preferred solvents appear to be those having a highly polar group combined with a hydrocarbon structure. Butanol has a solubility parameter of 10.8 which is very close to that of the polysulfone. In general, hydroxyl and hydroxyl-polyether compounds having hydrocarbon groups are preferred solvent treatment agents.

Solvents useful according to the invention, i.e. having a solubility parameter within plus or minus 2 of the solubility parameter of the polymeric material comprising the asymmetric gas separation membrane, can also result from solvent blends as can be found in Examples 9 and 10 of Table 3 and in Table 1, Examples 3 and 5. The uncoated, untreated asymmetric hollow fiber polysulfone membrane is presented as a control in Example 9, showing hydrogen and methane permeability and $\alpha$ for hydrogen methane. Example 10 shows the same asymmetric hollow fiber of polysulfone after being treated with a 50-40-10 by weight percent isopentane, isopropanol and acrylonitrile solvent having an average solubility parameter of about 9.5. Significant improvement was found to exist in the treated fiber for the separation of hydrogen from methane selectivity. The $\alpha$ for hydrogen/methane increased approximately 10 fold with reduction in permeability for hydrogen, but greater reduction in permeability for methane, i.e. the increase in $\alpha$ (separation factor).

## TABLE 3

| EXAMPLE | TREATMENT | $H_2$ P/$\ell$ $10^6$ | $CH_4$ P/$\ell$ $10^6$ | $\alpha$ $H_2/CH_4$ |
|---|---|---|---|---|
| 9 | None | 212.0 | 46.8 | 4.53 |
| 10 | 15 min. dip in 50% by wt. isopentane 40% by wt. isopropanol 10 by wt. acetylnitrile (2 hrs. 80°C. before and after dip) | 96.2 | 2.3 | 42.40 |

0141793
36-21 (6265)A

WE CLAIM:

1. An asymmetric gas separation membrane exhibiting substantially improved gas separation selectivity comprising: a preformed asymmetric gas separation membrane of polymeric material having selective permeation of at least one gas of a gaseous mixture over that of one or more remaining gases of the gaseous mixture which has been contacted on one or both surfaces with a solvent, the solvent having a solubility parameter within about plus or minus 2 of the solubility parameter of the polymeric material which comprises the asymmetric gas separation membrane.

2. The improved asymmetric gas separation membrane of Claim 1 wherein the separation factor for the one gas of the gas mixture is increased by at least 100% or greater.

3. The improved asymmetric gas separation membrane of Claim 2 wherein the improvement in separation factor for the one gas of the gas mixture is accomplished with a reduction of permeability rate of not more than about 50%.

4. The improved asymmetric gas separation membrane of Claim 1 wherein the solvent is selected from the group consisting essentially of alcohols, aromatics, halogenated hydrocarbons, ketones, esters, and plasticizers.

5. The improved asymmetric gas separation membrane of Claim 1 wherein the solvent is selected from alcohols.

6. The improved asymmetric gas separation membrane of Claim 5 wherein the alcohol solvents have from 1 to 6 or less carbon atoms per molecule.

7. The improved asymmetric gas separation membrane of Claim 1 wherein the solvent has a solubility parameter within plus or minus 1 of the polymer solubility parameter, the polymers being selected from the group consisting essentially of polyethers.

8.  The improved asymmetric gas separation membrane of Claim 1 wherein both the solvent and the polymer have solubility parameters equal to or greater than about 9 and equal to or less than about 12.

9.  The improved asymmetric gas separation membrane of Claim 1 wherein the solvent contains from about 0.3% to about 5.0% of a compound which retards membrane densification.

10.  The improved asymmetric gas separation membrane of Claim 1 wherein the compound is comprised of siloxanediols.

11.  A process for improving the selectivity of an asymmetric gas separation membrane of polymeric material exhibiting selective permeation of at least one gas of a gaseous mixture over that of one or more remaining gases of a gaseous mixture comprising:

contacting the preformed asymmetric gas separation membrane with a solvent, the solvent having a solubility parameter of plus or minus 2 of the solubility parameter of the polymeric material which comprises the asymmetric gas separation membrane, the asymmetric membrane being contacted on one or both surfaces with the solvent for periods sufficient with respect to at least one pair of gases to improve the separation factor significantly greater than the separation factor exhibited by the asymmetric membrane before solvent treatment; and

removing the residual solvent.

12.  The process according to Claim 11 wherein the improved asymmetric gas separation membrane is contacted with a solvent selected from the group consisting essentially of alcohols, aromatics, halogenated hydrocarbons, esters, and plasticizers.

13. The process according to Claim 11 wherein the solvent is contacted with the asymmetric gas separation membrane for a period varying from about 15 seconds to about 30 minutes.

14. The process according to Claim 11 wherein the solvent is in a vapor state when contacted with the preformed asymmetric gas separation membrane.

15. The process according to Claim 11 wherein the solvent is in a liquid state when contacted with the preformed asymmetric gas separation membrane and the liquid solvent can be comprised of one or more solvents.

16. The process according to Claim 11 wherein the material of the preformed asymmetric gas separation membrane is comprised of polymers and copolymers and substituted polymers of polyethers.

17. The process according to Claim 11 wherein the material of the preformed asymmetric gas separation membrane is comprised of polymers and copolymers and substituted polymers of polysulfone, polyethersulfone, polyphenylene oxide, and styrene-acrylonitrile copolymers.

18. The process according to Claim 11 wherein the solvent has a solubility parameter within plus or minus 1 of the polymer solubility parameter which comprises the asymmetric gas separation membrane.

19. A process for improving the selectivity of a multicomponent membrane for gas separations wherein an asymmetric membrane is coated with one or more materials, said multicomponent membrane exhibiting selectivity permeation of at least one gas of a gaseous mixture over that of one or more of the remaining gases of a gaseous mixture comprising: contacting the preformed multicomponent gas separation membrane with an effective amount of a solvent when the solvent has the solubility parameter of within plus or minus 2 of the polymer solubility parameter which comprises the asymmetric membrane portion of the multicomponent membrane, the solvent being contacted on one or both surfaces of the multicomponent membrane for a period sufficient with respect to at least one pair of gases to improve the separation factor significantly greater than the separation factor exhibited by the multicomponent membrane for solvent treatment.

0141793

European Patent
Office

**EUROPEAN SEARCH REPORT**

Application number

EP 84 87 0085

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | DE-A-2 750 874 (MONSANTO CO.) * Page 63, lines 12-22 * & US-A-4 230 463 (Cat. D) | 1,3 | B 01 D 53/22 |
| A | DE-B-2 110 158 (RHONE-POULENC S.A.) * Claims 1, 5; column 4, lines 4-8 * | 1,4-6 | |

TECHNICAL FIELDS SEARCHED (Int. Cl. ³)

B 01 D 53/00

The present search report has been drawn up for all claims

| Place of search BERLIN | Date of completion of the search 08-10-1984 | Examiner BERTRAM H E H |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82